# EUROPÄISCHE PATENTSCHRIFT

(11) **EP 0 414 958 B1**
(45) Veröffentlichungstag und Bekanntmachung des Hinweises auf die Patenterteilung: **15.09.1993**
(21) Anmeldenummer: 89119302.1
(22) Anmeldetag: 18.10.1989
(51) Int. Cl.: B23B 31/00, B23B 31/30

(54) **Spanneinrichtung an Werkzeugmaschinen**
Clamping device on machine tools
Dispositif de serrage pour machines-outils

(30) Priorität: 01.09.1989 DE 3929011
(43) Veröffentlichungstag der Anmeldung: 06.03.1991
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 082 968
- GB-A- 2 097 707

## Beschreibung

Die Erfindung betrifft eine Spanneinrichtung an Werkzeugmaschinen mit einem umlaufenden Spannzylinder und einem darin mitumlaufend angeordneten, axial verschiebbaren Spannkolben, ferner mit einem Verteiler, der ein die Anschlüsse für das Arbeitsmedium tragendes Verteilergehäuse und eine mit dem Spannkolben verbundene und in der Wand des Spannzylinders axial verschiebbare Verteilerwelle umfaßt, auf der das Verteilergehäuse so angeordnet ist, daß die Verteilerwelle darin umlaufen kann und das Verteilergehäuse bei den Axialverschiebungen des Spannkolbens mitnimmt, und mit einer Kontrolleinrichtung für die Axialverschiebungen des Spannkolbens, bestehend aus mindestens einem Schaltstück und mindestens einem davon betätigbaren Schaltglied, von welchen das Schaltglied mit dem Verteilergehäuse und das Schaltstück mit einem Ausleger verbunden ist, der am Verteilergehäuse axial längsverschieblich geführt ist und mittels eines am Spannzylinder angeordneten Lagers gegen Axialverschiebungen relativ zum Spannzylinder festgelegt ist, wozu das Lager einen in Bezug auf den Spannzylinder koaxialen, drehbaren und axial unverschiebbaren Lagerring aufweist, an dem der Ausleger gehalten ist.

Spanneinrichtungen dieser Art sind aus DE-A-31 17 850 bekannt. Bei ihnen ist der Ausleger ein Flachschieber, der in Führungsnuten eines am Verteilergehäuse angeordneten Führungskörpers läuft. Der Flachschieber ist mit seinem dem Spannzylinder zugekehrten Ende fest an einen Ring angeschlossen, der in der radialen Mittelebene geteilt ist. Beide Ringteile sind durch Schrauben axial verspannt und übergreifen den Lagerring radial mit je einer Ringschulter, so daß zwischen diesen Ringschultern der Lagerring fest eingespannt ist. Diese Anordnung ist nicht nur hinsichtlich der Ausbildung der Längsführung für den Ausleger aufwendig, sondern erfordert auch eine sehr genaue Abstimmung zwischen dem radialen Abstand der Längsführung des Auslegers von der Achse der Verteilerwelle einerseits und dem Durchmesser des Lagerrings andererseits. - Diese Abstimmung entfällt zwar bei einer aus derselben Druckschrift bekannten anderen Ausführungsform, bei der an Stelle des am Spannzylinder angeordneten Lagers am Ausleger eine drehbar gelagerte Rolle vorgesehen ist, die an ringförmig umlaufenden Lagerflächen des Spannzylinders geführt ist, welche durch die Flanken einer Ringnut am Spannzylinder gebildet sind. Jedoch sind bei dieser Ausführungsform die Reibungsverluste zwischen der Rolle und den Nutflanken um so größer, je geringer das freie Spiel zwischen der Rolle und den Nutflanken ist. Möglichste Spielfreiheit aber ist erforderlich, soll eine exakte Kontrolle der Spannkolbenbewegung gewährleistet sein.

Der Erfindung liegt die Aufgabe zugrunde, eine Spanneinrichtung der eingangs genannten Art so auszubilden, daß sie bei konstruktiv und fertigungstechnisch einfachem Aufbau eine exakte Überwachung der Spannkolbenbewegungen ermöglicht.

Diese Aufgabe wird dadurch gelöst, daß der Ausleger mindestens einen axial verlaufenden Führungsstab aufweist, der radial verschiebbar an den Lagerring angeschlossen und in koaxialen Führungsöffnungen angeordnet ist, die sich in Führungsansätzen befinden, welche am Verteilergehäuse axial mit freiem Abstand voneinander ausgebildet sind. Der Führungsstab kann unmittelbar das Schaltstück tragen.

Durch diese Maßnahmen ergibt sich nicht nur ein für die Herstellung und Montage besonders einfacher Aufbau der Längsführung des Auslegers, sondern auch ein sehr vorteilhafter Anschluß des Auslegers an den Lagerring. Da der Führungsstab und der Lagerring relativ zueinander radial verschiebbar sind, kann sich der Ausgleich zwischen dem Abstand des Führungsstabs von der Achse der Verteilerwelle und dem Durchmesser des Lagerrings selbsttätig einstellen. Insoweit entfallen aufwendige Genauigkeitsanforderungen bei der Herstellung und Montage.

Eine bevorzugte Ausführungsform der Erfindung ist dadurch gekennzeichnet, daß der Führungsstab an seinem dem Spannzylinder zugekehrten Ende zwei zwischen sich den Lagerring axial formschlüssig und radial verschiebbar aufnehmende Flansche aufweist. Dabei empfiehlt es sich, daß der dem Lagerring auf der Seite des Verteilergehäuses anliegende Flansch als koaxial auf dem Führungsstab angeordneter Ringflansch ausgebildet ist, der auf dem Führungsstab axial verschiebbar geführt ist und durch eine Feder gegen den Lagerring angedrückt ist. Durch den federnden Andruck des Ringflansches gegen den Lagerring ergibt sich ohne weiteres die gewünschte axiale Spielfreiheit zwischen dem Ausleger und dem Lagerring. Der Führungsstab kann eine die Verschiebung des Flansches gegen die Wirkung der Feder begrenzende Ringschulter aufweisen, was eine Vormontage des Ringflansches am Führungsstab ermöglicht, und zwar insbesondere dann, wenn nach einem weiteren Vorschlag der Erfindung die Feder gegen einen in einer Ringnut des Führungsstab eingelassenen Federring abgestützt und als Tellerfeder ausgebildet ist.

Zweckmäßigerweise ist der Lagerring gegen Drehung am Ausleger gesichert, wozu der Führungsstab bei kreisrundem Querschnitt zwischen den Flanschen einen Stift aufweist, der radial in eine am Lagerring vorgesehene Ausnehmung greift. Die Führungsöffnungen für den Ausleger sind dann einfach herstellbare Bohrungen. Auch wird verhindert, daß sich die Schaltstücke gegenüber den Schaltgliedern verdrehen können.

In einer bevorzugten Ausführungsform ist das Schaltstück als auf dem Führungsstab axial verschiebbarer Schaltring ausgebildet, der mit einer radial im Schaltring geführten Stellschraube auf dem Führungsstab feststellbar ist. Das bietet die Möglichkeit, mehrere Schaltglieder versetzt über den Umfang des Führungsstabs bzw. des Schaltrings anzuordnen. In dieser Hinsicht empfiehlt es sich weiter, daß das Verteilergehäuse eine den Führungsstab überfassende Haube für die Aufnahme des Schaltglieds trägt. Dann besteht die besonders vorteilhafte Möglichkeit, daß in der Wand der Haube mehrere parallel zur Verstellrichtung des Führungsstabs verlaufende Montageschlitze vorgesehen sind, und daß das Schaltglied längs den Montageschlitzen zwischen den Führungsansätzen verschiebbar und an den Rändern der Montageschlitze feststellbar sind. Im Ergebnis erhält man durch die axiale Verstellbarkeit des Schaltstücks und des Schaltgliedes und durch die Möglichkeit, am Führungsstab mehrere Schaltstücke und an der Haube mehrere Schaltglieder anzuordnen, sehr vielseitige und allen Aufgabenstellungen unschwer anpaßbare Kontrollmöglichkeiten für die Spannkolbenbewegung. Eine weitere vorteilhafte Möglichkeit ist dadurch gekennzeichnet, daß mehrere Führungsstäbe und Führungsansätze über den Umfang des Verteilergehäuses verteilt angeordnet sind. Dabei können die vom Spannzylinder abgewandten, axial über das Verteilergehäuse vorstehenden Enden der Führungsstäbe durch eine Platte verbunden sein, die als Träger eines Anschlagstabes ausgebildet ist, der bei einem Spannzylinder mit freiem Durchgang axial in die hohle Verteilerwelle vorsteht, um einen Anschlag für stangenförmige Werkstücke zu bilden.

Im folgenden wird die Erfindung an einem in der Zeichnung dargestellten Ausführungsbeispiel näher erläutert; es zeigen:
- Fig. 1: einen Axialschnitt durch eine Spanneinrichtung mit Spannzylinder Verteiler und Kontrolleinrichtung,
- Fig. 2: einen Querschnitt durch den Gegenstand nach Fig. 1.
- Fig. 3: einen Axialschnitt durch eine weitere Ausführungsform einer Spanneinrichtung nach der Erfindung in einer der Fig. 1 entsprechenden Darstellung, und
- Fig. 4: einen der Fig. 2 entsprechenden Querschnitt durch die Spanneinrichtung nach Fig. 3.

Der in der Zeichnung dargestellte Spannzylinder 1 für Spanneinrichtungen an Werkzeugmaschinen besitzt ein Zylindergehäuse 3 mit einem darin verschiebbaren Spannkolben 2, der an eine nicht dargestellte Spannstange angeschlossen werden kann. Normalerweise ist das Zylindergehäuse 3 am Ende der nicht dargestellten Werkzeugmaschinenspindel befestigt und läuft einschließlich des Spannkolbens 2 mit dieser um.

An den Spannzylinder 1 ist ein allgemein mit 4 bezeichneter Verteiler angeschlossen. Dieser Verteiler 4 besitzt ein nicht mit dem Spannzylinder 1 rotierendes Verteilergehäuse 5, das seitlich liegende Anschlüsse 6 für das den Spannzylinder 1 betätigende Arbeitsmedium trägt. Im Verteilergehäuse 5 läuft eine Verteilerwelle 7 um, die mittels Lager 8, 9 im Verteilergehäuse 5 gelagert ist. Das Lager 9 liegt axial an einer Schulter 10 der Verteilerwelle 7, das Lager 8 auf der anderen Seite an einem Sicherungsring 11 an, so daß das Verteilergehäuse 5 auf der Verteilerwelle 7 axial unverrückbar gehalten ist. Die Verteilerwelle 7 ist fest mit dem Spannkolben 2 verbunden und axial verschiebbar in der Wand des Spannzylinders 1 gelagert. Im Ergebnis wird eine Verstellung des Spannkolbens 2 in axialer Richtung unverändert über die Verteilerwelle 7 auf das Verteilergehäuse 5 übertragen.

Die auf der Innenseite des Verteilergehäuses 5 umlaufenden Ringnuten 12, 13 dienen zur Zu- und Abführung des Arbeitsmediums und stehen mit den Anschlüssen 6 für das Arbeitsmedium in Verbindung. Zwischen der Verteilerwelle 7 und dem Verteilergehäuse 5 durchtretendes Lecköl wird im Kanal 14 gesammelt und durch den Anschluß 15 abgeleitet. Die Verteilerwelle 7 besitzt zwei in den Spannzylinder 1 zu entgegengesetzten Seiten des Spannkolbens 2 führende Wellenkanäle 18, 19, die mit den Ringnuten 12, 13 in Verbindung stehen. Die Steuerung des Arbeitsmediums durch die Wellenkanäle 18, 19 wahlweise zu einer der beiden Seiten des Spannkolbens 2 erfolgt in üblicher Weise und bedarf keiner Beschreibung.

Zur Wegkontrolle der Axialverschiebungen des Spannkolbens 2 ist eine Kontrolleinrichtung vorgesehen, die aus mehreren Schaltgliedern 20, beispielsweise Berührungsschaltern, und einem Schaltstück 21 zur Betätigung der Schaltglieder 20 besteht. Die Schaltglieder 20 sind mit dem Verteilergehäuse 5 verbunden und nehmen an dessen Axialverschiebungen teil.

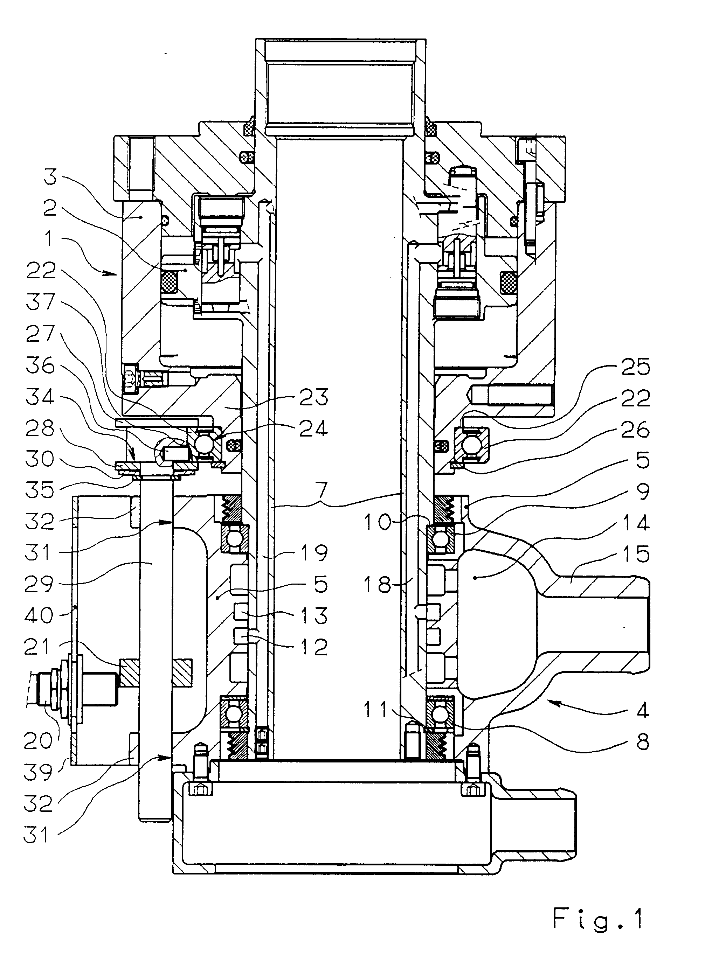

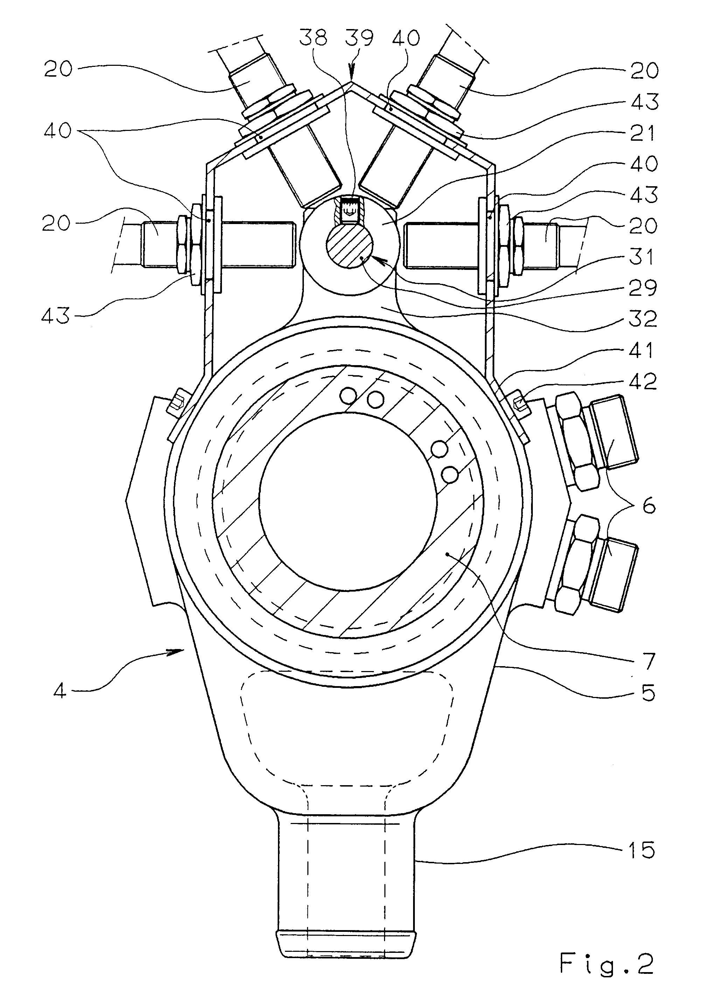

Weiter ist in den Fig. 1 und 2 am Verteilergehäuse 5 in einer Längsführung ein Führungsstab 29 axial verschiebbar geführt, der das Schaltstück 21 trägt. Die axiale Festlegung des Führungsstabs 29 erfolgt am Spannzylinder 1 mit Hilfe eines Ringkugellagers 24. Dazu besitzt der Spannzylinder 1 an seiner dem Verteiler 4 zugewandten Stirnseite einen Ringbund 23, auf dem das zum Spannzylinder 1 koaxiale Ringkugellager 24 angeordnet ist. Es besitzt einen relativ zum Spannzylinder 1 drehbaren und axial unverschiebbaren Lagerring 22. Im einzelnen ist das Lager 24 auf dem Ringbund 23 zwischen einer Ringschulter 25 und einem Sicherungsring 26 angeordnet. Der Lagerring 22 selbst greift axial formschlüssig und radial verschiebbar zwischen zwei Flansche 27, 28, die am Führungsstab 28 an seinem dem Spannzylinder 1 zugekehrten Ende axial mit gegenseitigem freien Abstand nebeneinander angeordnet sind.

Der Führungsstab 29 ist durch seine Längsführung am Verteilergehäuse 5 gegen drehende Mitnahme durch den Spannzylinder 1 gesichert. Im einzelnen dienen zur Bildung der Längsführung für den Führungsstab 29 zwei am Verteilergehäuse 5 ausgebildete Führungsansätze 33, die den Führungsstab 29 aufnehmende Führungsöffnungen 31 besitzen. Die Führungsöffnungen 31 sind im Querschnitt ebenso wie der Führungsstab 29 selbst kreisrund gestaltet.

Der dem Lagerring 22 auf der Seite des Spannzylinders 21 anliegende Flansch 27 ist als den Führungsstab 29 begrenzender, mit ihm koaxialer Stirnflansch ausgebildet und fest mit dem Führungsstab verbunden. Der dem Lagerring 22 auf der Seite des Verteilergehäuses 5 anliegende Flansch 28 ist als Ringflansch ausgebildet, der auf dem Führungsstab 29 axial verschiebbar geführt und durch eine Feder 30 gegen den Lagerring 22 angedrückt ist. Der Führungsstab 29 trägt eine die Verschiebung des Flansches 28 gegen die Wirkung der Feder 30 begrenzende Ringschulter 34 und einen in eine Ringnut des Führungsstabs 29 eingelassenen Federring 35, gegen den die als Tellerfeder ausgebildete Feder 30 axial abgestützt ist. Durch diesen federnden Andruck des Flansches 28 ist der Lagerring 22 axial spielfrei mit dem Führungsstab 29 verbunden. Der Lagerring 22 ist gegen Drehung am Führungsstab 29 gesichert, wozu der Führungsstab 29 zwischen den Flanschen 27, 28 einen Stift 36 aufweist, der radial in eine am Lagerring 22 vorgesehene, taschenartig ausgebildete Ausnehmung 37 greift.

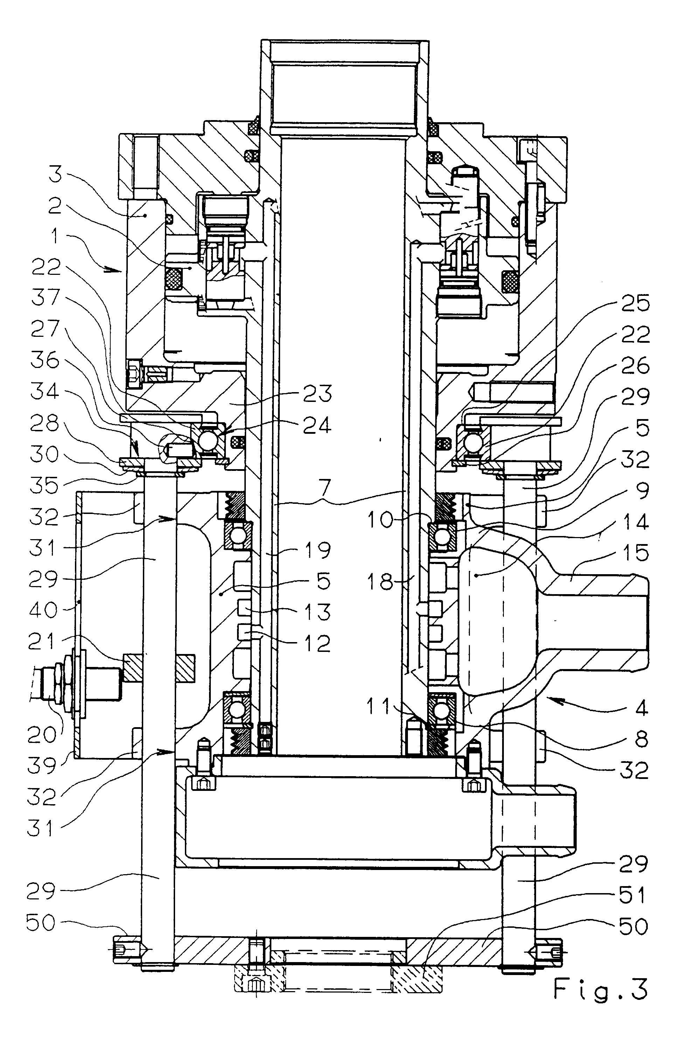

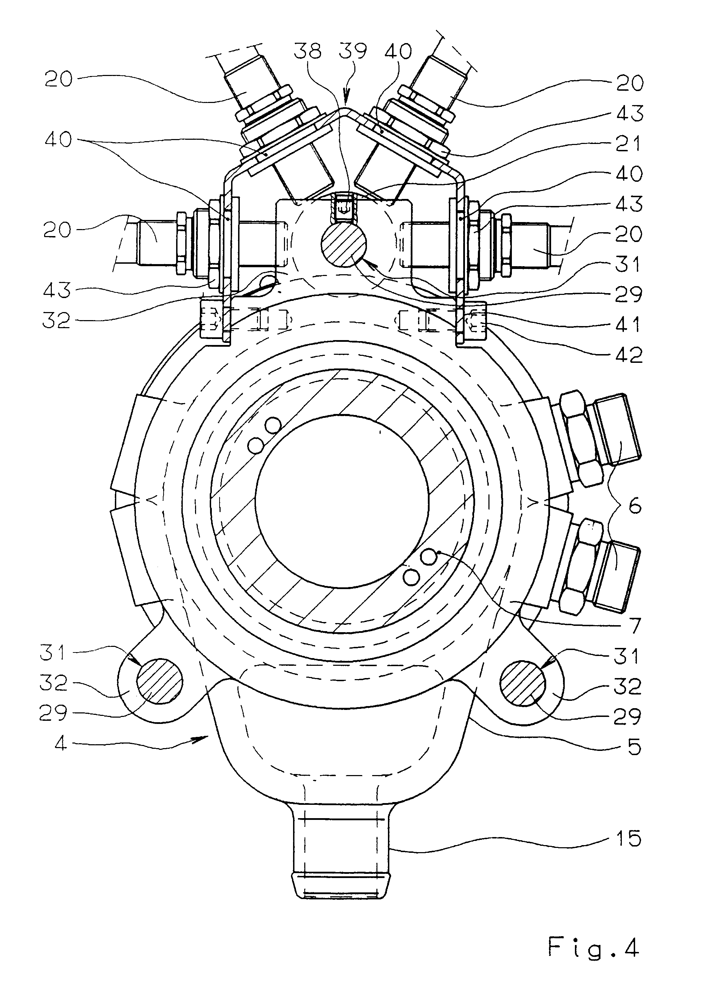

Das Schaltstück 21 ist ein auf dem Führungsstab 29 axial verschiebbarer Schaltring. Er kann mit einer radial im Schaltring geführten Stellschraube 38 auf dem Führungsstab 29 in jeweils gewünschter Position festgestellt werden. Selbstverständlich können auch mehrere Schaltstücke 21 längs des Führungsstabs 29 vorgesehen sein. Zur Aufnahme der Schaltglieder 20 trägt das Verteilergehäuse 5 an seitlichen Flanschflächen 41 eine mit Schrauben 42 befestigte Haube 39, die den Führungsstab 29 von oben her und seitlich übergreift. In der Wand der Haube 39 sind mehrere parallel zur Verstellrichtung des Führungsstabs 29 verlaufende Montageschlitze 40 vorgesehen. Die Schaltglieder 20 sind längs dieser Montageschlitze 40 zwischen den Führungsansätzen 32 verschiebbar und an den Rändern der Montageschlitze 40 mittels Spannmuttern 42 feststellbar. Die Montageschlitze 40 befinden sich jeweils in streifenförmigen ebenen Wandbereichen der Haube 39, wobei diese Wandbereiche jeweils gegeneinander geneigt sind und im Haubenquerschnitt einem Polygonzug folgen. Durch die Neigung dieser streifenförmigen Wandbereiche der Haube 39 ist die Winkelausrichtung der Schaltglieder 20 über den Umfang des Führungsstabs 29 bestimmt. Von der Ausführungsform nach den Fig. 1 und 2 unterscheidet sich die nach den Fig. 3 und 4 im wesentlichen allein darin, daß mehrere Führungsstäbe 29, nämlich insgesamt drei Führungsstäbe, über den Umfang des Verteilergehäuses 5 verteilt angeordnet sind. Für jeden Führungsstab 29 sind zwei eigene Führungsansätze 32 mit Führungsöffnungen 31 vorgesehen. Jeder dieser Führungsstäbe 29 ist an den Lagerring 22 radial verschiebbar angeschlossen und kann als Träger von Schaltstücken 21 dienen, wenn dem Führungsstab entsprechende Hauben 39 als Schaltgliedträger zugeordnet sind. Im Ausführungsbeispiel ist dies aber wie in den Fig. 1 und 2 nur für einen einzigen der Führungsstäbe 29 dargestellt.

Die Fig. 3 und 4 zeigen weiter den Fall ,daß die vom Spannzylinder 1 abgewandten Enden der Führungsstäbe 29 axial über das Verteilgehäuse 5 vorstehen und durch eine Platte 50 verbunden sind, die durch eine zentrale Öffnung und ein Ringfutter 51 als Träger für einen nicht dargestellten Anschlagstab ausgebildet ist. Besitzt - wie in den Ausführungsbeispielen - der Spannzylinder einen freien Durchgang für die Bearbeitung stangenförmiger Werkstücke, so kann der Anschlagstab axial in die hohle Verteilerwelle 7 vorstehen und einen Anschlag für das Werkstück bilden.

Sind, wie in den Fig. 3 und 4, die Führungsstäbe 29 durch die Platte 50 oder dergl. untereinander starr verbunden, so genügt es auch, nur einen einzigen Führungsstab 29 an den Lagerring 22 anzuschließen, um alle anderen Führungsstäbe 29 gegen Axialverschiebungen zu sichern.

## Patentansprüche

1. Spanneinrichtung an Werkzeugmaschinen mit einem umlaufenden Spannzylinder (1) und einem darin mitumlaufend angeordneten, axial verschiebbaren Spannkolben (2), ferner mit einem Verteiler (4), der ein die Anschlüsse (6) für das Arbeitsmedium tragendes Verteilergehäuse (5) und eine mit dem Spannkolben (2) verbundene und in der Wand des Spannzylinders (1) axial verschiebbare Verteilerwelle (7) umfaßt, auf der das Verteilergehäuse (5) so angeordnet ist, daß die Verteilerwelle (7) darin umlaufen kann und das Verteilergehäuse (5) bei den Axialverschiebungen des Spannkolbens (2) mitnimmt, und mit einer Kontrolleinrichtung für die Axialverschiebungen des Spannkolbens (2), bestehend aus mindestens einem Schaltstück (21) und mindestens einem davon betätigbaren Schaltglied (20), von welchen das Schaltglied (20) mit dem Verteilergehäuse (5) und das Schaltstück (21) mit einem Ausleger verbunden ist, der am Verteilergehäuse (5) axial längsverschieblich geführt ist und mittels eines am Spannzylinder (1) angeordneten Lagers (24) gegen Axialverschiebungen relativ zum Spannzylinder (1) festgelegt ist, wozu das Lager (24) einen in Bezug auf den Spannzylinder (1) koaxialen, drehbaren und axial unverschiebbaren Lagerring (22) aufweist, an dem der Ausleger gehalten ist, dadurch gekennzeichnet, daß der Ausleger mindestens einen axial verlaufenden Führungsstab (29) aufweist, der radial verschiebbar an den Lagerring (22) angeschlossen und in koaxialen Führungsöffnungen (31) angeordnet ist, die sich in Führungsansätzen (32) befinden, welche am Verteilerhäuse (5) axial mit freiem Abstand voneinander ausgebildet sind.

2. Spanneinrichtung nach Anspruch 1, dadurch gekennzeichnet, daß der Führungsstab (29) unmittelbar das Schaltstück (21) trägt.

3. Spanneinrichtung nach Anspruch 1 oder 2, dadurch gekennzeichnet, daß der Führungsstab (29) an seinem dem Spannzylinder (1) zugekehrten Ende zwei zwischen sich den Lagerring (22) axial formschlüssig und radial verschiebbar aufnehmende Flansche (27, 28) aufweist.

4. Spanneinrichtung nach einem der Ansprüche 1 bis 3, dadurch gekennzeichnet, daß der dem Lagerring (22) auf der Seite des Verteilergehäuses (5) anliegende Flansch (28) als koaxial auf dem Führungsstab (29) angeordneter Ringflansch ausgebildet ist, der auf dem Führungsstab (29) axial verschiebbar geführt ist und durch eine Feder (30) gegen den Lagerring (22) angedrückt ist.

5. Spanneinrichtung nach Anspruch 4, dadurch gekennzeichnet, daß der Führungsstab (29) eine die Verschiebung des Flansches (28) gegen die Wirkung der Feder (30) begrenzende Ringschulter (34) aufweist.

6. Spanneinrichtung nach Anspruch 4 oder 5, dadurch gekennzeichnet, daß die Feder (30) gegen einen in eine Ringnut des Führungsstabs (29) eingelassenen Federring (35) abgestützt und als Tellerfeder ausgebildet ist.

7. Spanneinrichtung nach einem der Ansprüche 4 bis 6, dadurch gekennzeichnet, daß der Lagerring (22) gegen Drehung am Führungsstab (29) gesichert ist, wozu der Führungsstab (29) bei kreisrundem Querschnitt zwischen den Flanschen (27, 28) einen Stift (36) aufweist, der radial in eine am Lagerring (22) vorgesehene Ausnehmung (37) greift.

8. Spanneinrichtung nach einem der Ansprüche 2 bis 7, dadurch gekennzeichnet, daß das Schaltstück (21) als auf dem Führungsstab (29) axial verschiebbarer Schaltring ausgebildet ist, der mit einer radial im Schaltring geführten Stellschraube (38) auf dem Führungsstab (29) feststellbar ist.

9. Spanneinrichtung nach einem der Ansprüche 1 bis 8, dadurch gekennzeichnet, daß das Verteilergehäuse (5) eine den Führungsstab (29) überfassende Haube (39) für die Aufnahme des Schaltgliedes (20) trägt.

10. Spanneinrichtung nach Anspruch 9, dadurch gekennzeichnet, daß in der Wand der Haube (39) mehrere parallel zur Verstellrichtung des Führungsstabs (29) verlaufende Montageschlitze (40) vorgesehen sind, und daß das Schaltglied (20) längs den Montageschlitzen (40) zwischen den Führungsansätzen (32) verschiebbar und an den Rändern der Montageschlitze (40) feststellbar ist.

11. Spanneinrichtung nach einem der Ansprüche 1 bis 10, dadurch gekennzeichnet, daß mehrere Führungsstäbe (29) und Führungsansätze (32) über den Umfang des Verteilergehäuses (5) verteilt angeordnet sind.

12. Spanneinrichtung nach Anspruch 1, dadurch gekennzeichnet, daß bei mehreren Führungsstäben (29) deren vom Spannzylinder (1) abgewandte axial über das Verteilergehäuse (5) vorstehende Enden durch eine Platte (50) verbunden sind, die als Träger eines Anschlagstabes ausgebildet ist, der bei einem Spannzylinder mit freiem Durchgang axial in die hohle Verteilerwelle (7) vorsteht.

## Claims

1. A clamping arrangement on machine tools comprising a rotary clamping cylinder (1) and a clamping piston which is arranged jointly rotatably therein and which is axially displaceable, further comprising a distributor (4) which includes a distributor housing (5) carrying the connections (6) for the working medium and a distributor shaft (7) which is connected to the clamping piston (2) and which is axially displaceable in the wall of the clamping cylinder (1) and on which the distributor housing (5) is so arranged that the distributor shaft (7) can rotate therein and entrains the distributor housing (5) in the axial displacements of the clamping piston (2), and a control means for the axial displacements of the clamping piston (2), comprising at least one switch portion (21) and at least one switch member (20) actuable thereby, of which the switch member (20) is connected to the distributor housing (5) and the switch portion (21) is connected to an arm which is axially longitudinally displaceably guided on the distributor housing (5) and which is feed to prevent axial displacement relative to the clamping cylinder (1) by means of a bearing (24) arranged on the clamping cylinder (1), for which purpose the bearing (24) has a rotatable and axially immovable bearing race (22) which is coaxial with respect to the clamping cylinder (1) and to which the arm is held, characterised in that the arm has at least one axially extending guide bar (29) which is radially displaceably connected to the bearing race (22) and arranged in coaxial guide openings (31) which are disposed in guide projections (32) which are provided on the distributor housing (5) axially at a free spacing from each other.

2. A clamping arrangement according to claim 1 characterised in that the guide bar (29) directly carries the switch portion (21).

3. A clamping arrangement according to claim 1 or claim 2 characterised in that at its end towards the clamping cylinder (1) the guide bar (29) has two flanges (27, 28) which axially positively and radially displaceably accommodate the bearing race (22) between them.

4. A clamping arrangement according to one of claims 1 to 3 characterised in that the flange (28) which bears against the bearing race (22) on the side of the distributor housing (5) is in the form of an annular flange which is arranged coaxially on the guide bar (29) and which is axially displaceably guided on the guide bar (29) and which is pressed against the bearing race (22) by a spring (30).

5. A clamping arrangement according to claim 4 characterised in that the guide bar (29) has an annular shoulder (34) for limiting the displacement of the flange (28) against the force of the spring (30).

6. A clamping arrangement according to claim 4 or claim 5 characterised in that the spring (30) is supported against a spring ring (35) which is fitted into an annular groove in the guide bar (29) and the spring (30) is in the form of a plate spring.

7. A clamping arrangement according to one of claims 4 to 6 characterised in that the bearing race (22) is prevented from rotating on the guide bar (29), for which purpose the guide bar (29), with a round cross-section, is provided between the flanges (27, 28) with a pin (36) which engages radially into an opening (37) in the bearing race (22).

8. A clamping arrangement according to one of claims 2 to 7 characterised in that the switch portion (21) is in the form of a switch ring which is axially displaceable on the guide bar (29) and which can be fixed on the guide bar (29) by an adjusting screw (38) which is carried radially in the switch ring.

9. A clamping arrangement according to one of claims 1 to 8 characterised in that the distributor housing (5) carries a hood (39) for carrying the switch member (20), the hood covering over the guide bar (29).

10. A clamping arrangement according to claim 9 characterised in that a plurality of mounting slots (40) which extend parallel to the direction of displacement of the guide bar (29) are provided in the wall of the hood (39) and that the switch member (20) is displaceable along the mounting slots (40) between the guide projections (32) and can be fixed to the edges of the mounting slots (40).

11. A clamping arrangement according to one of claims 1 to 10 characterised in that a plurality of guide bars (29) and guide projections (32) are arranged distributed over the periphery of the distributor housing (5).

12. A clamping arrangement according to claim 1 characterised in that, when there are a plurality of guide bars (29), the ends thereof which are remote from the clamping cylinder (1) and which project axially beyond the distributor housing (5) are connected by a plate (50) which is in the form of a carrier of an abutment bar which, in the case of a clamping cylinder with a free through opening, projects axially into the hollow distributor shaft (7).

## Revendications

1. Dispositif de serrage pour machines-outils, comprenant un cylindre de serrage (1) tournant et un piston de serrage (2) tournant également à l'intérieur de ce dernier et déplaçable dans le sens axial, ainsi qu'un distributeur (4) avec un carter de distributeur (5) muni de raccordements(6) pour le fluide moteur et un arbre de distributeur (7) mobile dans le sens axial dans la paroi du cylindre de serrage (1) et couplé avec le piston de serrage (2), sur lequel le carter de distributeur (5) est monté de telle façon que l'arbre (7) du distributeur peut tourner à l'intérieur dudit carter de distributeur (5) et qu'il l'entraîne lors des déplacements axiaux du piston de serrage (2), et un dispositif de contrôle pour les déplacements axiaux du piston de serrage (2), constitué par au moins une pièce de contact (21) et au moins un organe de commutation (20), ledit organe de commutation (20) étant relié au carter (5) du distributeur et la pièce de contact (21) à une console qui est guidée sur le carter (5) du distributeur de manière à pouvoir être déplacée longitudinalement dans le sens axial et qui peut être bloquée sur un palier (24) monté sur le cylindre de serrage (1) de façon à empêcher des déplacements axiaux par rapport au cylindre de serrage (1), le palier (24) étant muni à cet effet d'une bague de palier (22) qui est disposée de manière coaxiale, tournante et axialement immobile par rapport au cylindre de serrage (1) et maintient la console, **caractérisé en ce** que la console comporte au moins une barre de guidage (29) d'extension axiale qui est rattachée de manière mobile dans le sens radial à la bague de palier (22) et montée dans des ouvertures de guidage (31) coaxiales ménagées dans des embouts de guidage (32) lesquels sont conformés dans le carter (5) du distributeur, à distance libre l'un de l'autre.

2. Dispositif de serrage selon la revendication 1, caractérisé en ce que la barre de guidage (29) porte directement la pièce de contact (21).

3. Dispositif de serrage selon l'une des revendications 1 ou 2, caractérisé en ce que la barre de guidage (29) comporte à son extrémité tournée vers le cylindre de serrage (1), deux brides (27, 28) qui reçoivent entre elles la bague de palier (22) axialement à engagement positif et radialement de manière déplaçable.

4. Dispositif de serrage selon l'une des revendications 1 à 3, caractérisé en ce que la bride (28) appliquée contre la bague de palier (22) du côté du carter (5) du distributeur, est conformée en bride annulaire montée coaxialement sur la barre de guidage (29), qui est guidée axialement sur ladite barre de guidage (29) et appliquée par un ressort (30) contre la bague de palier (22).

5. Dispositif de serrage selon la revendication 4, caractérisé en ce que la barre de guidage (29) présente un épaulement annulaire (34) qui limite le déplacement de la bride (28) contre l'action du ressort (30).

6. Dispositif de serrage selon l'une des revendications 4 ou 5, caractérisé en ce que le ressort (30) prend appui sur une rondelle élastique bombée (35) insérée dans une rainure annulaire de la barre de guidage (29) et est conformé en rondelle-ressort.

7. Dispositif de serrage selon l'une des revendications 4 à 6, caractérisé en ce que la bague de palier (22) est bloquée en rotation sur la barre de guidage (29), raison pour laquelle la barre de guidage (29) avec une section transversale circulaire présente entre les brides (27, 28) une tige (36) qui s'engage radialement dans un évidement (37) prévu sur la bague de palier (22).

8. Dispositif selon l'une des revendications 2 à 7, caractérisé en ce que la pièce de contact (21) est réalisée sous la forme d'une bague de commutation déplaçable dans le sens axial sur la barre de guidage (29), qui peut être bloquée sur la barre de guidage (29) au moyen d'une vis de réglage (38) guidée radialement dans la bague de commutation.

9. Dispositif de serrage selon l'une des revendications 1 à 8, caractérisé en ce que le carter (5) du distributeur porte pour la réception de l'organe de commutation (20), un capot (39) qui recouvre la barre de guidage (29).

10. Dispositif de serrage selon la revendication 9, caractérisé en ce que dans la paroi du capot (39) est prévu une pluralité de fentes de montage (40) orientées parallèlement à la direction de déplacement de la barre de guidage (29), et que l'organe de commutation (20) peut être déplacé le long des fentes de montage (40) entre les embouts de guidage (32) et bloqué sur les bords desdites fentes de montage (40).

11. Dispositif de serrage selon l'une des revendications 1 à 10, caractérisé en ce que plusieurs barres de guidage (29) et embouts de guidage (32) sont répartis sur la périphérie du carter (5) du distributeur.

12. Dispositif de serrage selon la revendication 1, caractérisé en ce que, dans le cas de plusieurs barres de guidage (29), leurs extrémités détournées du cylindre de serrage (1) dépassant axialement du carter (5) du distributeur sont réunies par une plaque (50) qui est conformée en support d'une broche d'arrêt qui, pour un cylindre de serrage à passage libre, dépasse axialement dans l'arbre creux (7) du distributeur.
